# EUROPEAN PATENT APPLICATION

(11) **EP 4 834 732 A1**
(43) Date of publication of application: **04.11.2026**
(21) Application number: 26173837.1
(22) Date of filing: 21.04.2026
(51) Int. Cl.: B62D 35/00, B62D 37/02

(54) **VEHICLE**

(30) Priority: 01.05.2025 JP 2025076398
(71) Applicant: Toyota Jidosha Kabushiki Kaisha, Toyota-shi, Aichi-ken 471-8571 (JP)
(72) Inventor: TAKAHASHI, Yusuke, KARIYA-SHI, AICHI-KEN, 448-8650 (JP); SHIROMA, Yusuke, TOYOTA-SHI, AICHI-KEN, 471-8571 (JP); FUJIHARA, Sota, TOYOTA-SHI, AICHI-KEN, 471-8571 (JP)
(74) Representative: Cabinet Beau de Loménie

(57) **Abstract**

A vehicle (10) has: a fastback-shaped vehicle body (20); and a spoiler (30) structured so as to be able to move between a retracted state of being accommodated in a connected portion of an upper surface (21) of the vehicle body (20) and a rear surface (22) of the vehicle body (20), and an extended state of projecting out toward a vehicle rear side from the rear surface of the vehicle body (20) and forming an extension surface of the upper surface (21) of the vehicle body (20).

## Description

### BACKGROUND

### Technical Field

The present disclosure relates to a vehicle.

### Related Art

Japanese Patent Application Laid-Open (JP-A) No. 2018-135054 discloses a vehicle having a movable spoiler that, when the vehicle enters into a state of traveling, the spoiler moves from a retracted position of being accommodated in a spoiler accommodating portion to a projected position of being pulled-out to its maximum length from the spoiler accommodating portion, and forms a cavity at the rear portion of the vehicle body.

However, in the vehicle described in JP-A No. 2018-135054, an edge portion exists at the upper surface of the vehicle body between the rear windshield glass and the upper wall of the vehicle body. Therefore, the upper surface of the vehicle body is not a smooth surface. In other words, the vehicle body does not have a fastback shape. In such a structure, there is the possibility that the air resistance of the vehicle will be increased.

On the other hand, it has been thought to, in order to reduce the air resistance of the vehicle, make the shape of the rear portion of the vehicle body into the shape of a tapered streamline. However, if the shape of the rear portion of the vehicle body is made into the shape of a tapered streamline, there is the possibility that the internal space of the vehicle body will decrease as compared with a structure that is not tapered.

### SUMMARY

In view of the above-described circumstances, an object of the present disclosure is to provide a vehicle that can increase the internal space of a vehicle body and can reduce air resistance of the vehicle.

A vehicle relating to a first aspect has: a fastback-shaped vehicle body; and a flow manipulating portion structured so as to be able to move between a retracted state of being accommodated in a connected portion of an upper surface and a rear surface of the vehicle body, and an extended state of projecting out toward a vehicle rear side from the rear surface of the vehicle body and forming an extension surface of the upper surface of the vehicle body.

In the above-described structure, the vehicle body has a fastback shape. Due thereto, the space with the vehicle body (e.g., the passenger cabin or cargo compartment) can be made to be larger than, for example, a structure in which the rear surface of the vehicle body is made to be a shape that projects out toward the rear side (e.g., a streamline shape), if the lengths in the vehicle longitudinal direction were made to be the same.

On the other hand, in a case in which the vehicle body has a fastback shape, at the time when the vehicle travels, the air that has flowed along the upper surface of the vehicle body flows so as to drop along the rear surface from the rear end portion of the upper surface. Due thereto, at the rear side of the vehicle body, there is the possibility that swirling will arise excessively and that the air resistance of the vehicle will increase.

The above-described structure has the flow manipulating portion that, in the extended state, forms an extension surface of the upper surface of the vehicle body. Due thereto, by extending the flow manipulating portion, the air that flows along the upper surface of the vehicle body from the vehicle front side toward the rear side at the time when the vehicle travels is guided from the rear end portion of the vehicle body to the surface of the flow manipulating portion. Accordingly, it is difficult for the air that flows along the upper surface of the vehicle body to drop downwardly from the rear end portion of the vehicle body. Therefore, the occurrence of swirling at the rear side of the vehicle body is suppressed. Accordingly, air resistance of the vehicle at the time of traveling can be reduced.

In this way, in the above-described structure, the internal space of the vehicle body can be increased, and air resistance of the vehicle can be reduced.

Note that the retracted state is not only a state in which the flow manipulating portion is accommodated at the interior of some member, but also includes a state in which the flow manipulating portion is folded and is not exposed at the exterior.

In a vehicle relating to a second aspect, in the first aspect, in the extended state, an angle of an upper surface of the flow manipulating portion with respect to a horizontal plane is smaller than an angle of the upper surface of the vehicle body with respect to the horizontal plane.

In the above-described structure, in the extended state, the angle of the upper surface of the flow manipulating portion with respect to a horizontal plane is smaller than the angle of the upper surface of the vehicle body with respect to the horizontal plane. Due thereto, the air that has been guided from the rear end portion of the vehicle body to the upper surface of the flow manipulating portion can be guided to a position that is further away from the rear surface of the vehicle body. The occurrence of swirling at the rear side of the vehicle body is suppressed. Accordingly, air resistance of the vehicle at times of traveling can be reduced.

In a vehicle relating to a third aspect, in the first aspect, in the extended state, an angle of an upper surface of the flow manipulating portion with respect to a horizontal plane is a same angle as an angle of the upper surface of the vehicle body with respect to the horizontal plane.

In the above-described structure, in the extended state, the angle of the upper surface of the flow manipulating portion with respect to a horizontal plane is the same angle as the angle of the upper surface of the vehicle body with respect to the horizontal plane. Due thereto, also at times when the flow manipulating portion is extended, a streamline shape is formed by the upper surface of the vehicle body and the upper surface of the flow manipulating portion, and therefore, the design can be improved.

In a vehicle relating to a fourth aspect, in any one of the first aspect through the third aspect, in the extended state, an upper surface of the flow manipulating portion is flush with the upper surface of the vehicle body.

In the above-described structure, in the extended state, the upper surface of the flow manipulating portion is flush with the upper surface of the vehicle body. Due thereto, unevenness of the boundary between the vehicle body and the flow manipulating portion is reduced. Accordingly, air resistance of the vehicle can be reduced more. Further, the design of the vehicle can be improved more.

In a vehicle relating to a fifth aspect, in any one of the first aspect through the fourth aspect, in the retracted state, a rear end surface of the flow manipulating portion is flush with the rear surface of the vehicle body.

In the above-described structure, in the retracted state, the rear end surface of the flow manipulating portion is flush with the rear surface of the vehicle body. Due thereto, the design can be improved in the retracted state of the flow manipulating portion.

In a vehicle relating to a sixth aspect, in any one of the first aspect through the fifth aspect, the vehicle body has a back door that closes an opening communicating an internal space of the vehicle body and an external space of the vehicle body, and, in the retracted state, the flow manipulating portion is accommodated in the back door.

In the above-described structure, in the retracted state, the flow manipulating portion is accommodated in the back door. Due thereto, in the retracted state, the back door and the flow manipulating portion move together. Accordingly, the back door and the flow manipulating portion do not interfere with one another at times of opening and closing the back door. Due thereto, the flow manipulating portion can be provided while ensuring access to the internal space of the vehicle.

In a vehicle relating to a seventh aspect, in any one of the first aspect through the sixth aspect, a vehicle transverse direction length of the flow manipulating portion becomes shorter toward a vehicle rear side.

In the above-described structure, the vehicle transverse direction length of the flow manipulating portion becomes shorter toward the vehicle rear side. Due thereto, the air that flows along the side surfaces of the flow manipulating portion converges. Accordingly, air resistance of the vehicle body can be reduced.

In a vehicle relating to an eighth aspect, in any one of the first aspect through the seventh aspect, the flow manipulating portion has a first portion extending along a vehicle transverse direction, a second portion extending toward a lower side from a vehicle transverse direction one end portion of the first portion, and a third portion extending toward a lower side from a vehicle transverse direction another end portion of the first portion, and the second portion is provided at a vehicle transverse direction one end portion of the vehicle body, and the third portion is provided at a vehicle transverse direction another end portion of the vehicle body.

In the above-described structure, the second portion and the third portion that extend in the vehicle longitudinal direction are provided at the vehicle transverse direction both end portions of the vehicle body. Due thereto, in the extended state of the flow manipulating portion, the air that flows along the side surfaces of the vehicle body from the vehicle front side toward the rear side is guided from the rear end portion of the vehicle body to the side surface of the second portion or the third portion. Accordingly, it is difficult for the air that flows along the side surfaces of the vehicle body to get swirled-up from the rear end portion of the vehicle body in toward the rear side of the vehicle body. Therefore, swirling arising at the rear side of the vehicle body is suppressed. Accordingly, the air resistance of the vehicle at the time of traveling can be reduced.

In a vehicle relating to a ninth aspect, in any one of the first aspect through the eighth aspect, the vehicle body has an undercover structuring a bottom surface, and a rear end portion of the undercover projects out further toward a vehicle rear side than the rear surface of the vehicle body.

In the above-described structure, the rear end portion of the undercover projects out further toward the vehicle rear side than the rear surface of the vehicle body. Due thereto, it is difficult for the air, which flows from the vehicle front side toward the vehicle rear side along the lower surface of the vehicle body (in other words, the lower surface of the undercover) at the time when the vehicle travels, to get swirled-up from the rear end portion of the undercover in toward the rear side of the vehicle body. Accordingly, swirling arising at the rear side of the vehicle body is suppressed. Accordingly, the air resistance of the vehicle at the time of traveling can be reduced.

In a vehicle relating to a tenth aspect, in the ninth aspect, a lower surface of the undercover is inclined toward an upper side on progression toward a vehicle rear side, and a vehicle longitudinal direction position of a rear end portion of the flow manipulating portion that is in the extended state is at a same position as a vehicle longitudinal direction position of the rear end portion of the undercover.

In the above-described structure, the vehicle longitudinal direction position of the rear end portion of the flow manipulating portion in its extended state is at the same position as the vehicle longitudinal direction position of the rear end portion of the undercover. Due thereto, in the extended state of the flow manipulating portion, the air, which flows from the vehicle front side toward the rear side along the upper surface and the lower surface of the vehicle body, can be converged in the vertical direction. Accordingly, air resistance of the vehicle can be reduced.

In a vehicle relating to an eleventh aspect, in any one of the first aspect through the tenth aspect, in the retracted state, the flow manipulating portion is accommodated at an interior of the vehicle body, and the vehicle has a moving mechanism that moves the flow manipulating portion between the retracted state and the extended state by sliding the flow manipulating portion along a vehicle longitudinal direction.

The above-described structure has the moving mechanism that moves the flow manipulating portion between the retracted state and the extended state by sliding the flow manipulating portion along the vehicle longitudinal direction. Due thereto, due to the flow manipulating portion being slid by the moving mechanism, the retracted state and the extended state of the flow manipulating portion can be switched.

In a vehicle relating to a twelfth aspect, in any one of the first aspect through the tenth aspect, in the retracted state, the flow manipulating portion is provided so as to run along the rear surface of the vehicle body, and the vehicle has a moving mechanism that moves the flow manipulating portion between the retracted state and the extended state by rotating the flow manipulating portion around an axis that extends in a vehicle transverse direction.

The above-described structure has the moving mechanism that moves the flow manipulating portion between the retracted state and the extended state by rotating the flow manipulating portion around an axis that extends in the vehicle transverse direction. Due thereto, due to the flow manipulating portion being rotated by the moving mechanism, the retracted state and the extended state of the flow manipulating portion can be switched.

As described above, the vehicle relating to the present disclosure has the excellent effects that the internal space of the vehicle body can be increased, and the air resistance of the vehicle can be reduced.

### BRIEF DESCRIPTION OF THE DRAWINGS

Exemplary embodiments of the present invention will be described in detail based on the following figures, wherein:
Fig. 1 is a schematic side view of a rear portion of a vehicle relating to a first embodiment, and is a drawing illustrating a state in which a spoiler is retracted;
Fig. 2 is a schematic perspective view of the rear portion of the vehicle relating to the first embodiment, and is a drawing illustrating the state in which the spoiler is retracted;
Fig. 3 is a schematic side view of the rear portion of the vehicle relating to the first embodiment, and is a drawing illustrating a state in which the spoiler is extended;
Fig. 4 is a schematic perspective view of the rear portion of the vehicle relating to the first embodiment, and is a drawing illustrating the state in which the spoiler is extended;
Fig. 5 is a schematic plan view of the rear portion of the vehicle relating to the first embodiment, and is a drawing illustrating the state in which the spoiler is retracted;
Fig. 6 is a schematic plan view of the rear portion of the vehicle relating to the first embodiment, and is a drawing illustrating the state in which the spoiler is extended;
Fig. 7 is a schematic side view of a rear portion of a vehicle relating to a second embodiment, and is a drawing illustrating a state in which a spoiler is retracted;
Fig. 8 is a schematic side view of the rear portion of the vehicle relating to the second embodiment, and is a drawing illustrating a state in which the spoiler is extended;
Fig. 9 is a schematic side view of a rear portion of a vehicle relating to a third embodiment, and is a drawing illustrating a state in which a spoiler is extended;
Fig. 10 is a schematic side view of a rear portion of a vehicle relating to a fourth embodiment, and is a drawing illustrating a state in which a spoiler is extended; and
Fig. 11 is a schematic rear view of the rear portion of the vehicle relating to the fourth embodiment, and is a drawing illustrating the state in which the spoiler is extended.

### DETAILED DESCRIPTION

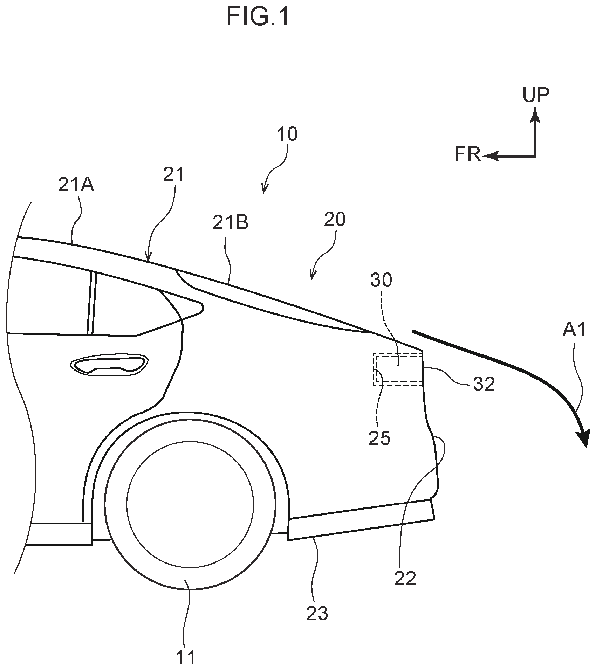

Embodiments of a vehicle relating to the present disclosure are described hereinafter with reference to Fig. 1 through Fig. 11. Note that arrow FR shown appropriately in the respective drawings indicates the vehicle forward direction that is the front side in the vehicle longitudinal direction, arrow IN indicates the inward direction in the vehicle transverse direction, and arrow UP indicates the vehicle upward direction that is the upper side in the vehicle vertical direction. When merely "longitudinal direction", "transverse direction" and "vertical direction" are used in the following description, they refer to the vehicle longitudinal direction, the vehicle transverse direction and the vehicle vertical direction, respectively. Further, the left-right direction means the left-right direction in a state of facing in the vehicle forward direction.

### <First Embodiment>

A vehicle relating to a first embodiment is described with reference to Fig. 1 through Fig. 6.

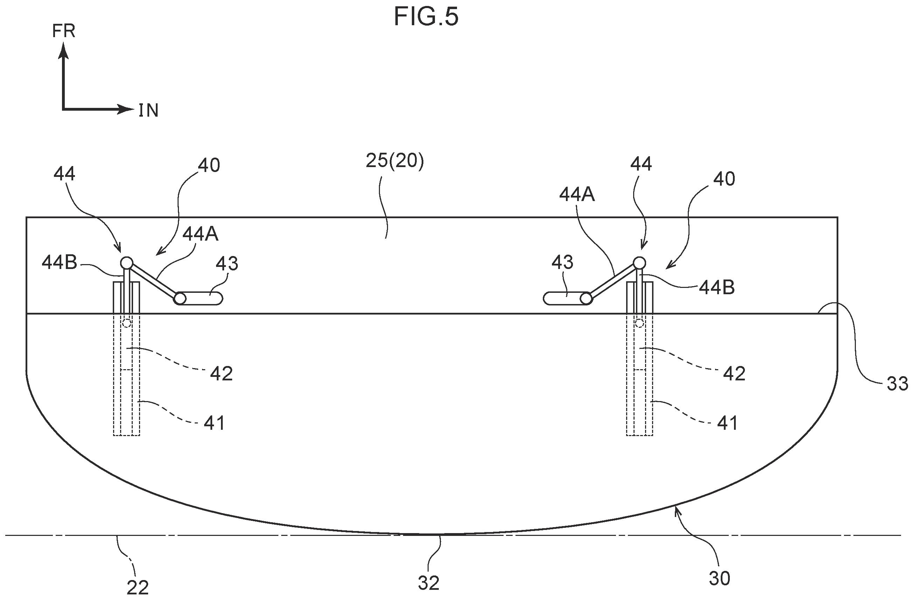

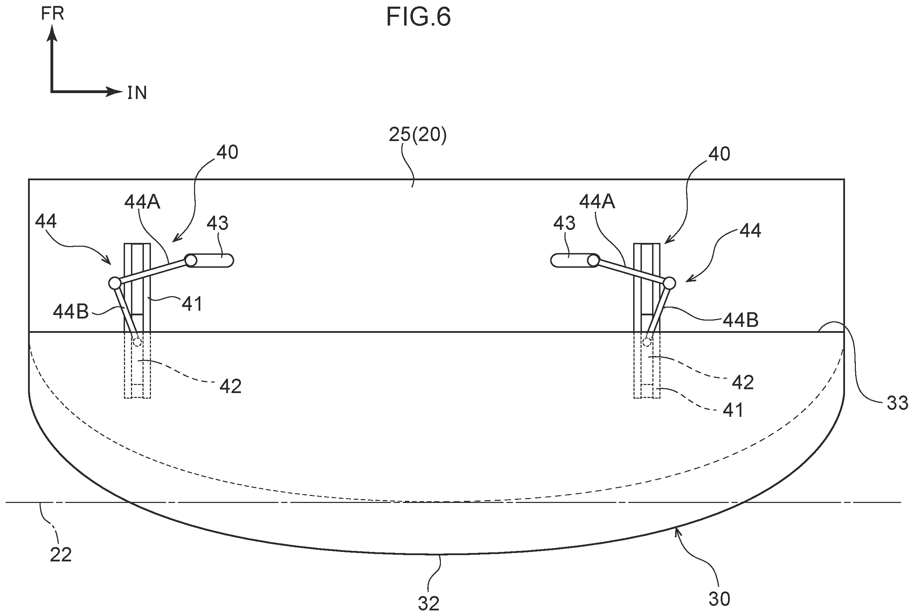

As illustrated in Fig. 1, a vehicle 10 has front wheels (not illustrated) and rear wheels 11, a vehicle body 20 to which the front wheels and rear wheels 11 are mounted, and a spoiler (flow manipulating portion) 30 provided at the rear portion of the vehicle body 20. Further, as illustrated in Fig. 5 and Fig. 6, the vehicle 10 has moving mechanisms 40 that move the spoiler 30.

### <Vehicle Body 20>

As illustrated in Fig. 1, the vehicle body 20 has an upper surface 21 curved such that the height thereof becomes lower from the vehicle longitudinal direction central portion toward the rear end portion, a rear surface 22 extending toward the lower side from the rear end portion of the upper surface 21, and an undercover 23 structuring the bottom surface. Namely, the vehicle body 20 has a fastback shape. Further, the vehicle body 20 has an accommodating chamber 25 that accommodates the spoiler 30.

In further detail, the upper surface 21 is inclined or curved continuously such that the height thereof becomes lower from the vehicle longitudinal direction central portion toward the rear end portion. In other words, at the region thereof from the vehicle longitudinal direction central portion to the rear end portion, the upper surface 21 of the vehicle body 20 is a smooth inclined surface or curved surface whose height becomes lower from the vehicle longitudinal direction central portion toward the rear end portion. This inclined surface or curved surface is a continuous surface. If a curved surface is included in the upper surface of the vehicle body, the curved surface is gently curved such that the upper side thereof is convex.

The upper surface 21 includes a roof panel 21A and a rear windshield glass 21B. Note that the upper surface 21 may include other members. For example, the upper surface 21 may include a roof glass or a back door.

The upper end of the rear surface 22 is connected to the rear end portion of the upper surface 21. The spoiler 30 is accommodated in the connected portion (in other words, the edge portion) of the upper surface 21 and the rear surface 22.

The rear surface 22 is curved or bent from the rear end portion of the upper surface 21, and extends substantially toward the vertically lower side. In other words, the rear surface 22 is provided so as to be cut downwardly. The rear end portion of the undercover 23 is connected to the lower end of the rear surface 22. The rear surface 22 is a substantially flat surface. The angle formed by the upper surface 21 and the rear surface 22 of the vehicle body 20 is an obtuse angle.

The undercover 23 is provided at the lower portion of the vehicle. The undercover 23 is a plate-shaped member, and covers the structures at the lower portion of the vehicle from the lower side. The lower surface of the undercover 23 is included in the lower surface of the vehicle body 20. The position, in the vehicle longitudinal direction, of the rear end portion of the undercover 23 in the present embodiment is substantially the same as that of the rear surface 22.

The accommodating chamber 25 is provided, for example, at the connected portion (the edge portion) of the upper surface 21 and the rear surface 22 of the vehicle body 20. Specifically, the accommodating chamber 25 may be provided at the back door of the vehicle body 20 for example. The back door is a part that, at the rear portion of the vehicle body 20, closes the opening that communicates the internal space of the vehicle body and the external space of the vehicle body. For example, the accommodating chamber 25 is formed so as to be recessed toward the vehicle front side from the rear surface 22 of the vehicle body 20. An opening that communicates with the space at the rear side of the vehicle 10 is provided at the rear end of the accommodating chamber 25, and the spoiler 30 is retracted and extended via this opening.

### <Spoiler 30>

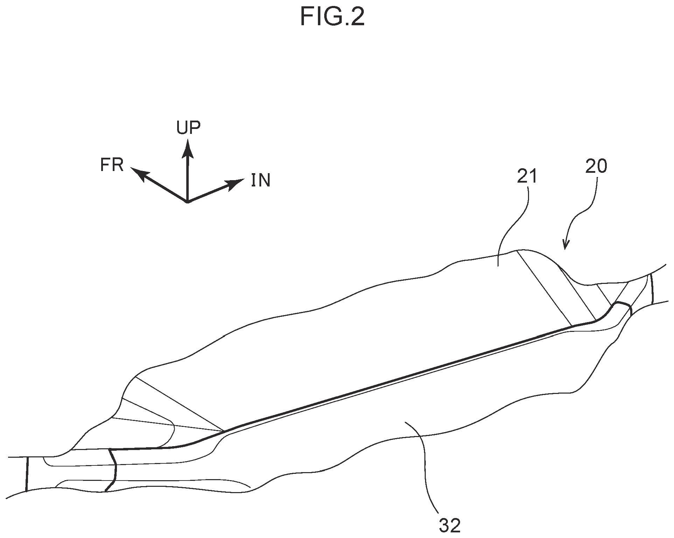

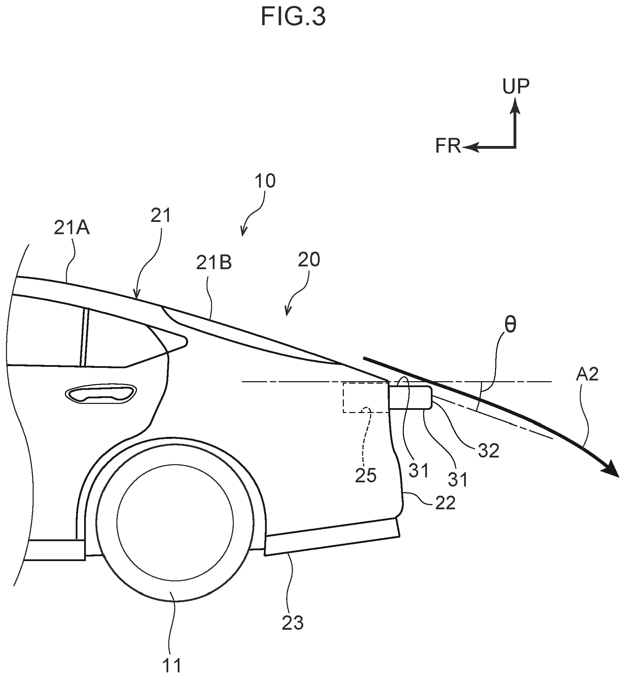

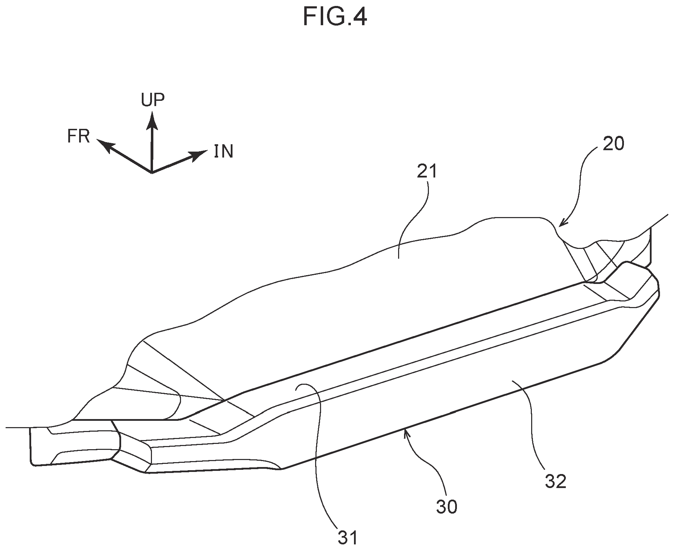

As illustrated in Fig. 1 through Fig. 4, the spoiler 30 is structured so as to be able to move between an extended state in which the spoiler 30 projects out toward the vehicle rear side from the rear surface 22 of the vehicle body 20 (see Fig. 3 and Fig. 4), and a retracted state in which the spoiler 30 is accommodated at the interior of the vehicle body 20 (see Fig. 1 and Fig. 2). Moving of the spoiler 30 is carried out by the moving mechanisms 40. The spoiler 30 is a substantially plate-shaped member, and has an upper surface 31. As illustrated in Fig. 5 and Fig. 6, the length of the spoiler 30 in the vehicle transverse direction becomes shorter toward the vehicle rear side. Specifically, as seen in a plan view, front end portion 33 in the vehicle longitudinal direction of the spoiler 30 is formed in the shape of a straight line extending along the vehicle transverse direction. Further, as seen in a plan view, rear end portion 32 in the vehicle longitudinal direction of the spoiler 30 is formed in the shape of a curve that protrudes out toward the rear side.

### <Extended State>

First, the spoiler 30 that is in its extended state is described. The extended state is the state in which the spoiler 30 exhibits predetermined aerodynamic characteristics. Further, the extended state is a state in which the spoiler 30 projects out toward the vehicle rear side from the rear surface 22 of the vehicle body 20. In detail, the extended state is a state in which the length by which the spoiler 30 projects out toward the vehicle rear side from the rear surface 22 of the vehicle body 20 (hereinafter simply called "projecting length") is longer than the projecting length of the spoiler 30 that is in the retracted state. In the present embodiment, as will be described later, in the retracted state, the spoiler 30 is accommodated at the interior of the vehicle body 20 and does not project-out from the rear surface 22. Therefore, the projecting length of the spoiler 30 in the retracted state is 0. On the other hand, in the extended state, the spoiler 30 projects out by a predetermined length from the rear surface 22 of the vehicle body 20. Accordingly, the projecting length of the spoiler 30 in the extended state is longer than the projecting length of the spoiler 30 in the retracted state.

In the extended state, the upper surface 31 of the spoiler 30 is provided so as to extend the upper surface 21 of the vehicle body 20 toward the vehicle rear side. In other words, in the extended state, the spoiler 30 forms an extension surface of the upper surface 21 of the vehicle body 20. Namely, the spoiler 30 is provided so as to, in the extended state, guide the majority of the air, which has flowed along the upper surface 21 of the vehicle body 20, to the upper surface 31 of the spoiler 30. The upper surface 31 of the spoiler 30 and the upper surface 21 of the vehicle body 20 may be flush with one another. Air resistance is reduced more in a case in which the upper surface 31 of the spoiler 30 and the upper surface 21 of the vehicle body 20 are made to be flush. Further, the upper surface 31 of the spoiler 30 and the upper surface 21 of the vehicle body 20 do not have to be flush. Namely, there may be a step between the upper surface 31 of the spoiler 30 and the upper surface 21 of the vehicle body 20.

As illustrated in Fig. 3, in the extended state, the angle of the upper surface 31 with respect to horizontal plane H is smaller than angle θ of the upper surface 21 of the vehicle body 20 with respect to the horizontal plane H. Specifically, the spoiler 30 is provided such that, in the extended state, the upper surface 31 runs along the horizontal plane H. Namely, in the extended state, the angle of the upper surface 31 of the spoiler 30 with respect to the horizontal plane H is 0°. On the other hand, the upper surface 21 of the vehicle body 20 is provided so as to be inclined with respect to the horizontal plane H. Namely, the upper surface 21 of the vehicle body 20 is a predetermined angle θ with respect to the horizontal plane H. Here, angle θ is a numerical value that is greater than or equal to 0° and less than or equal to 90°. Accordingly, in the extended state, the angle of the upper surface 31 of the spoiler 30 with respect to the horizontal plane H is less than the angle θ of the upper surface 21 of the vehicle body 20 with respect to the horizontal plane H.

### <Retracted State>

First, the spoiler 30 that is in the retracted state is described. The retracted state is a state in which the spoiler 30 does not exhibit predetermined aerodynamic characteristics. Further, the retracted state is a state in which the spoiler 30 does not project out toward the vehicle rear side from the rear surface 22 of the vehicle body 20. In detail, the retracted state is a state in which the projecting length of the spoiler 30 is shorter than the projecting length of the spoiler 30 that is in the extended state. In the present embodiment, as will be described later, in the retracted state, the spoiler 30 is accommodated at the interior of the vehicle body 20 and does not project-out from the rear surface 22. Therefore, the projecting length of the spoiler 30 in the retracted state is 0. On the other hand, in the extended state, the spoiler 30 projects out by a predetermined length from the rear surface 22 of the vehicle body 20. Accordingly, the projecting length of the spoiler 30 in the retracted state is shorter than the projecting length of the spoiler 30 in the extended state.

As illustrated in Fig. 1, in the retracted state, the spoiler 30 is accommodated in the accommodating chamber 25 that is provided at the interior of the vehicle body 20. As illustrated in Fig. 1 and Fig. 2, in the retracted state, the entire spoiler 30 is accommodated in the accommodating chamber 25, and the spoiler 30 does not project out from the rear surface 22 of the vehicle body 20. In detail, in the retracted state, rear end surface 32 of the spoiler 30 is flush with the rear surface 22 of the vehicle body 20.

### <Moving Mechanisms 40>

As illustrated in Fig. 5 and Fig. 6, the moving mechanisms 40 slide the spoiler 30 in the vehicle longitudinal direction. Two of the moving mechanisms 40 are provided. The two moving mechanisms 40 are provided so as to be apart from one another in vehicle transverse direction. The two moving mechanisms 40 are structured so as to be symmetrical in the vehicle left-right direction.

The moving mechanism 40 has a rail 41 fixed to the vehicle body 20, a sliding portion 42 engaged with the rail 41 so as to slide freely and fixed to the spoiler 30, a fixed portion 43 fixed to the vehicle body 20, an arm portion 44 connecting the sliding portion 42 and the fixed portion 43, and a drive source (not illustrated) driving the arm portion 44.

The rail 41 extends rectilinearly along the vehicle longitudinal direction. The rail 41 is fixed to the bottom surface of the accommodating chamber 25 of the vehicle body 20. A groove, with which the sliding portion 42 slidably engages, is provided in the upper surface of the rail 41. The groove extends rectilinearly along the vehicle longitudinal direction.

The sliding portion 42 extends along the vehicle longitudinal direction. The sliding portion 42 is a member that is rectangular as seen in a plan view, and slidably engages with the rail 41. In detail, the sliding portion 42 engages with the groove of the rail 41 so as to be able to slide along the vehicle longitudinal direction. The lower surface of the spoiler 30 is connected to the upper surface of the sliding portion 42. One end of the arm portion 44 is connected to the sliding portion 42.

The fixed portion 43 is fixed to the vehicle body 20. The fixed portion 43 is fixed to the bottom surface of the accommodating chamber 25 of the vehicle body 20. The fixed portion 43 is provided at the vehicle transverse direction inner side of the rail 41. Another end of the arm portion 44 is connected to the fixed portion 43. The another end of the arm portion 44 is rotatably connected to the fixed portion 43.

The arm portion 44 has a first arm 44A connected to the fixed portion 43, and a second arm 44B connected to the sliding portion 42.

The first arm 44A extends rectilinearly, and one end thereof is rotatably connected to the fixed portion 43. In detail, at the portion thereof that is connected to the fixed portion 43, the first arm 44A can rotate around a central axis that extends in the vertical direction. Further, the another end of the first arm 44A is rotatably connected to the second arm 44B. In detail, at the portion thereof that is connected to the second arm 44B, the first arm 44A can rotate around a central axis that extends in the vertical direction.

The second arm 44B extends rectilinearly, and one end thereof is rotatably connected to the sliding portion 42. In detail, at the portion thereof that is connected to the sliding portion 42, the second arm 44B can rotate around a central axis that extends in the vertical direction. Further, the another end of the second arm 44B is rotatably connected to the first arm 44A. At the portion thereof that is connected to the first arm 44A, the second arm 44B can rotate around a central axis that extends in the vertical direction.

The moving mechanisms 40 operate the arm portions 44 by driving forces from the drive sources. Due thereto, as illustrated in Fig. 5 and Fig. 6, the spoiler 30 slides in the vehicle longitudinal direction. Due to the moving mechanisms 40 sliding the spoiler 30 in this way, the retracted state and the extended state of the spoiler 30 can be switched.

### <Operation/Effects>

The following operation and effects are achieved in accordance with the present embodiment. In the present embodiment, the vehicle body 20 has a fastback shape. In other words, the vehicle body 20 has the upper surface 21 and the rear surface 22 that extends toward the lower side from the upper surface 21. The rear surface 22 of the vehicle body 20 is provided so as to be cut downwardly. Due thereto, the space within the vehicle body 20 (e.g., the passenger cabin or cargo compartment) can be made to be larger than, for example, a structure in which the rear surface 22 of the vehicle body 20 is made to be a shape (e.g., a streamline shape) that projects out toward the rear side, if the lengths in the vehicle longitudinal direction were to be the same.

On the other hand, in a case in which the rear surface 22 of the vehicle body 20 is provided so as to be cut downwardly, at the time when the vehicle travels, the air that has flowed along the upper surface 21 of the vehicle body 20 flows so as to drop along the rear surface 22 from the rear end portion of the upper surface 21 (refer to arrow A1 in Fig. 1). Due thereto, at the rear side of the vehicle body 20, there is the possibility that swirling will arise excessively and that the air resistance of the vehicle 10 will increase.

The present embodiment has the spoiler 30 that is provided such that, in the extended state, the upper surface of the spoiler 30 extends the upper surface 21 of the vehicle body 20 toward the vehicle rear side. Due thereto, by extending the spoiler 30, the air, which flows along the upper surface 21 of the vehicle body 20 from the vehicle front side toward the rear side at the time when the vehicle travels, is guided from the rear end portion of the vehicle body 20 to the upper surface of the spoiler 30. Accordingly, it is difficult for the air that flows along the upper surface 21 of the vehicle body 20 to drop downwardly from the rear end portion of the vehicle body 20 (refer to arrow A2 in Fig. 3). Due thereto, swirling occurring at the rear side of the vehicle body 20 is suppressed. Accordingly, air resistance of the vehicle at the time of traveling can be reduced.

In this way, in the present embodiment, the internal space of the vehicle body 20 can be increased, and air resistance of the vehicle can be reduced.

In the present embodiment, the spoiler 30 is structured so as to be able to move between the extended state and the retracted state. Further, in the present embodiment, in the retracted state, the spoiler 30 is accommodated in the accommodating chamber 25 of the vehicle body 20. Therefore, in the retracted state, the spoiler 30 is in a state in which it is difficult to be seen. Therefore, when the vehicle 10 is traveling at a low speed or is stopped, the spoiler 30 can be set in the retracted state, and it can be made difficult to see the spoiler 30 from the exterior of the vehicle 10. Accordingly, the design of the vehicle 10 can be improved. Further, in the present embodiment, because the spoiler 30 in the retracted state is accommodated in the accommodating chamber 25 of the vehicle body 20, in the retracted state, the spoiler 30 is in a state in which it is difficult for the spoiler 30 to affect the rearward field of view. Accordingly, when the spoiler 30 is in its retracted state, a deterioration in the rearward field of view can be suppressed.

Further, in the present embodiment, in the extended state, the angle of the upper surface 31 of the spoiler 30 with respect to the horizontal plane H is smaller than the angle of the upper surface 21 of the vehicle body 20 with respect to the horizontal plane H. Due thereto, the air that has been guided from the rear end portion of the vehicle body 20 to the upper surface of the spoiler 30 can be guided to a position that is further away from the rear surface 22 of the vehicle body 20. Swirling arising at the rear side of the vehicle body 20 is suppressed. Accordingly, air resistance of the vehicle 10 at times of traveling can be reduced.

In the present embodiment, in the retracted state, the rear end surface of the spoiler 30 is flush with the rear surface 22 of the vehicle body 20. Due thereto, in the retracted state of the spoiler 30, the design of the vehicle 10 can be improved.

Further, in the present embodiment, in the retracted state, the spoiler 30 is accommodated in the back door. Due thereto, in the retracted state, the back door and the spoiler 30 move together. Accordingly, the back door and the spoiler 30 do not interfere with one another at times of opening and closing the back door. Due thereto, the spoiler 30 can be provided while ensuring access to the internal space of the vehicle 10.

In the present embodiment, the vehicle transverse direction length of the spoiler 30 becomes shorter toward the vehicle rear side. Due thereto, the air that flows along the side surfaces of the spoiler 30 converges. Accordingly, air resistance of the vehicle body 20 can be reduced.

Moreover, the present embodiment has the moving mechanisms 40 that move the spoiler 30 between the retracted state and the extended state by sliding the spoiler 30 along the vehicle longitudinal direction. Due thereto, due to the spoiler 30 being slid by the moving mechanisms 40, the retracted state and the extended state of the spoiler 30 can be switched appropriately.

### <Second Embodiment>

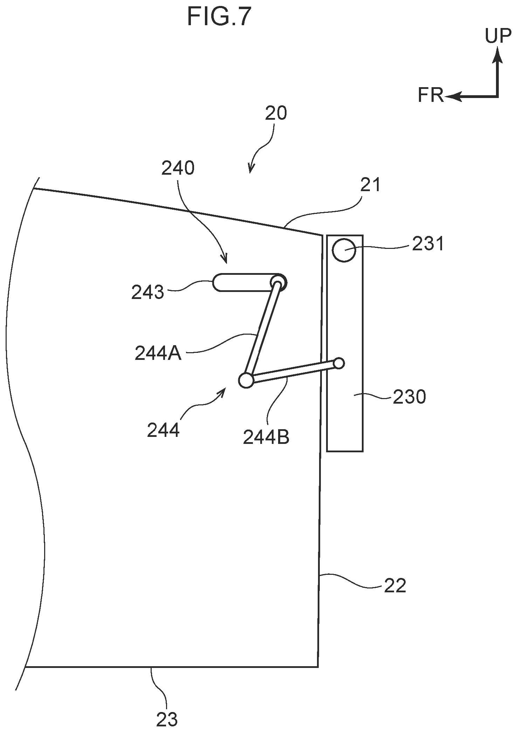

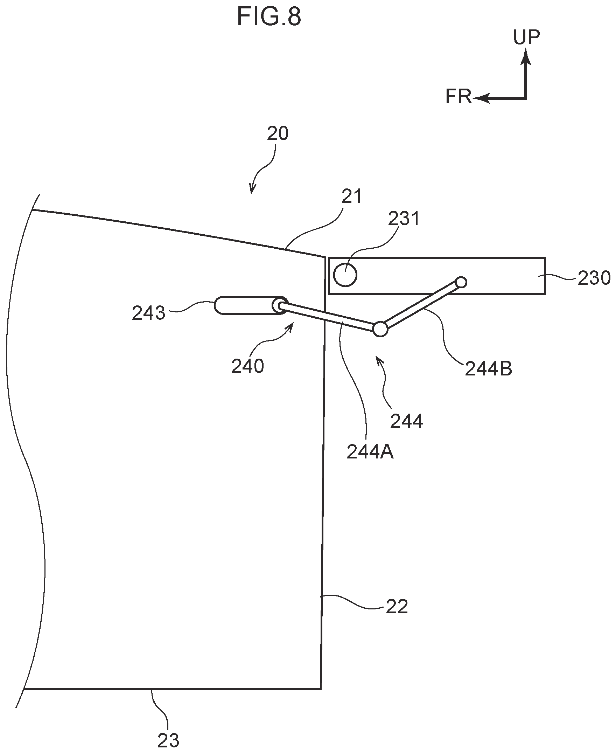

A vehicle relating to a second embodiment of the present disclosure is described next with reference to Fig. 7 and Fig. 8. In the present embodiment, the placement of the spoiler and the structure of the moving mechanism differ from those of the above-described first embodiment. Therefore, structures that are similar to those of the first embodiment are denoted by the same reference numerals, and detailed description thereof is omitted.

As illustrated in Fig. 7 and Fig. 8, spoiler 230 relating to the present embodiment is mounted to the vehicle body 20 such that the end portion thereof (the upper end portion in the retracted state and the rear end portion in the extended state) rotates freely. Specifically, the end portion of the spoiler 230 is mounted to the rear end portion and upper end portion of the vehicle body 20.

As illustrated in Fig. 7, in the retracted state, the spoiler 230 is provided so as to run along the rear surface 22 of the vehicle body 20. In the retracted state, the spoiler 230 abuts or is close to the rear surface 22 of the vehicle body 20.

Further, as illustrated in Fig. 8, the spoiler 230 is provided such that, in the extended state, upper surface extends the upper surface 21 of the vehicle body 20 toward the vehicle rear side. The projecting length of the spoiler 230 in the extended state is longer than the projecting length of the spoiler 230 in the retracted state. Note that, because the state of the spoiler 230 in the extended state is the same state as the extended state of the spoiler 30 in the first embodiment, detailed description thereof is omitted.

Moving mechanisms 240 move the spoiler 230 between the retracted state and the extended state by rotating the spoiler 230 around an axis that extends in the vehicle transverse direction. Two of the moving mechanisms 240 are provided. The two moving mechanisms 240 are provided so as to be apart from one another in vehicle transverse direction. The two moving mechanisms 240 are structured so as to be symmetrical in the vehicle left-right direction. The respective moving mechanisms 240 are provided further toward the vehicle front side than the spoiler 230. The moving mechanisms 240 are provided at the side surfaces of the vehicle body 20.

The moving mechanism 240 has a fixed portion 243 fixed to the vehicle body 20, an arm portion 244 connecting the spoiler 230 and the fixed portion 243, and a drive source (not illustrated) driving the arm portion 244.

The arm portion 244 has a first arm 244A connected to the fixed portion 243, and a second arm 244B connected to the spoiler 230.

The first arm 244A extends rectilinearly, and one end thereof is rotatably connected to the fixed portion 243. In detail, at the portion thereof that is connected to the fixed portion 243, the first arm 244A can rotate around a central axis that extends in the vehicle transverse direction. Further, the another end of the first arm 244A is rotatably connected to the second arm 244B. In detail, at the portion thereof that is connected to the second arm 244B, the first arm 244A can rotate around a central axis that extends in the vehicle transverse direction.

The second arm 244B extends rectilinearly, and one end thereof is rotatably connected to the spoiler 230. In detail, at the portion thereof that is connected to the spoiler 230, the second arm 244B can rotate around a central axis that extends in the vehicle transverse direction. Further, the another end of the second arm 244B is rotatably connected to the first arm 244A. In detail, at the portion thereof that is connected to the first arm 244A, the second arm 244B can rotate around a central axis that extends in the vehicle transverse direction.

The moving mechanisms 240 operate the arm portions 244 by driving forces from the drive sources. Due thereto, as illustrated in Fig. 7 and Fig. 8, the spoiler 230 rotates around a rotation shaft 231 that is provided at an end portion of the spoiler 230. Due to the moving mechanisms 240 rotating the spoiler 230 in this way, the retracted state and the extended state of the spoiler 230 can be switched.

The following operation and effects are achieved in accordance with the present embodiment.
In the present embodiment, due to the spoiler 230 being rotated by the moving mechanisms 240, the retracted state and the extended state of the spoiler 230 can be switched appropriately.

### <Third Embodiment>

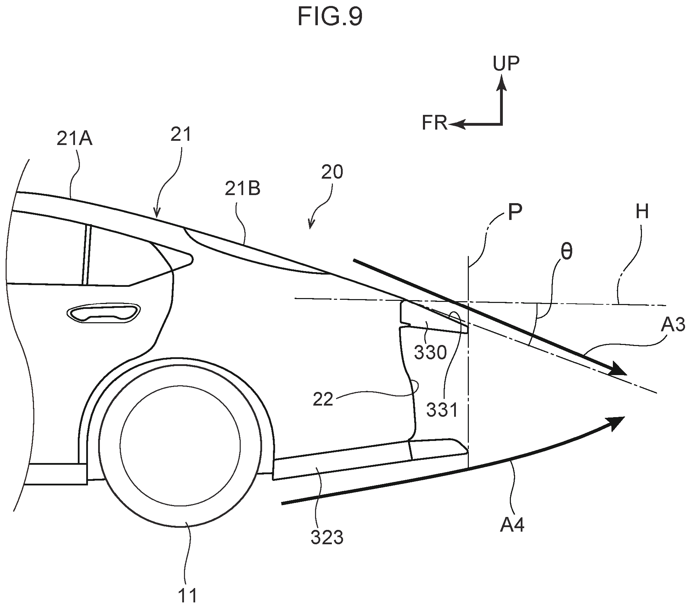

A vehicle relating to a third embodiment of the present disclosure is described next with reference to Fig. 9. In the present embodiment, the shapes of the spoiler and the undercover differ from those of the above-described first embodiment. Therefore, structures that are similar to those of the first embodiment are denoted by the same reference numerals, and detailed description thereof is omitted.

As illustrated in Fig. 9, the length in the vertical direction (in other words, the thickness) of spoiler 330 relating to the present embodiment becomes shorter toward the vehicle rear side. Upper surface 331 of the spoiler 330 is inclined with respect to a horizontal plane so as to be positioned further toward the lower side on progression toward the vehicle rear side.

Further, in the extended state, the angle of the upper surface 331 of the spoiler 330 with respect to the horizontal plane H is the same angle as the angle of the upper surface 21 of the vehicle body 20 with respect to the horizontal plane H. In other words, the angle of the upper surface 331 of the spoiler 330 with respect to the horizontal plane H, and the angle of the upper surface 21 of the vehicle body 20 with respect to the horizontal plane H, are both the same angle θ.

Moreover, in the extended state, the upper surface 331 of the spoiler 330 is flush with the upper surface 21 of the vehicle body 20.

The mechanism that moves the spoiler 330 is not particularly limited, and may be the moving mechanisms 40 described in the above first embodiment, or may be the moving mechanisms 240 described in the above second embodiment. Note that, in a case of employing the moving mechanisms 40 that were described in the first embodiment, there are cases in which a step arises between the upper surface 21 of the spoiler 330 and the upper surface 21 of the vehicle body 20 merely by sliding the spoiler 330. In such a case, a mechanism (not illustrated) that moves the spoiler 330 upward may be provided, and the spoiler 330 that has been slid may be raised upwardly by this mechanism, such that the step between the upper surface 21 of the spoiler 330 and the upper surface 21 of the vehicle body 20 is eliminated and the upper surface 331 of the spoiler 330 and the upper surface 21 of the vehicle body 20 are made flush.

The rear end portion of undercover 323 projects-out further toward the vehicle rear side than the rear surface 22 of the vehicle body 20. The position, in the vehicle longitudinal direction, of the rear end portion of the spoiler 330 that is in the extended state is the same position as the position, in the vehicle longitudinal direction, of the rear end portion of the undercover 323. Namely, the vehicle longitudinal direction position of the rear end portion of the spoiler 330 in the extended state and the vehicle longitudinal direction position of the rear end portion of the undercover 323 are both position P.

Further, the lower surface of the rear end portion of the undercover 323 (the portion projecting out from the rear surface of the vehicle body 20) is inclined with respect to a horizontal plane so as to be positioned further toward the upper side on progression toward the vehicle rear side.

The following operation and effects are achieved in accordance with the present embodiment.
In the present embodiment, in the extended state, the angle of the upper surface 331 of the spoiler 330 with respect to the horizontal plane H is the same angle as the angle of the upper surface 21 of the vehicle body 20 with respect to the horizontal plane H. Due thereto, also at times when the spoiler 330 is extended, a streamline shape is formed by the upper surface 21 of the vehicle body 20 and the upper surface 331 of the spoiler 330, and the design of the vehicle 10 can be improved.

Further, in the present embodiment, in the extended state, the upper surface 331 of the spoiler 330 is flush with the upper surface 21 of the vehicle body 20. Due thereto, unevenness of the boundary between the vehicle body 20 and the spoiler 330 is reduced. Accordingly, air resistance of the vehicle 10 can be reduced more. Further, the design of the vehicle 10 can be improved more.

In the present embodiment, the rear end portion of the undercover 323 projects out further toward the vehicle rear side than the rear surface 22 of the vehicle body 20. Due thereto, it is difficult for the air, which flows from the vehicle front side toward the vehicle rear side along the lower surface of the vehicle body 20 (in other words, the lower surface of the undercover 323) at the time when the vehicle travels, to get swirled-up from the rear end portion of the undercover 323 in toward the rear side of the vehicle body 20. Accordingly, the occurrence of swirling at the rear side of the vehicle body 20 is suppressed. Accordingly, the air resistance of the vehicle at the time of traveling can be reduced.

Further, in the present embodiment, the vehicle longitudinal direction position of the rear end portion of the spoiler 330 in its extended state is the same position as the vehicle longitudinal direction position of the rear end portion of the undercover 323. Due thereto, in the extended state of the spoiler 330, the air, which flows from the vehicle front side toward the rear side along the upper surface and the lower surface of the vehicle body 20, can be converged in the vertical direction (see arrow A3 and arrow A4 in Fig. 9). Accordingly, air resistance of the vehicle 10 can be reduced.

### <Fourth Embodiment>

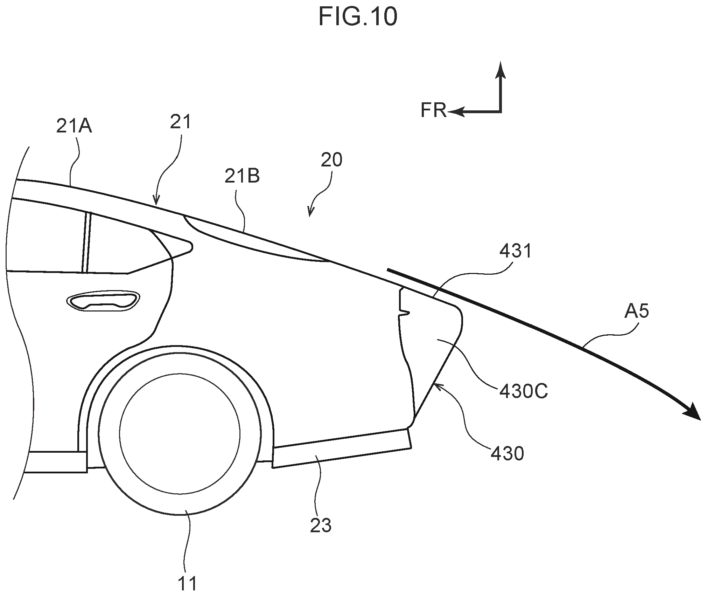

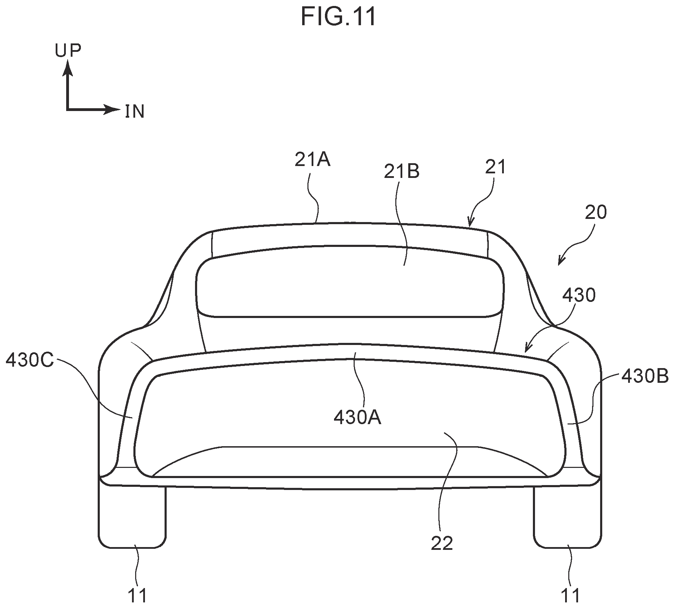

A vehicle relating to a fourth embodiment of the present disclosure is described next with reference to Fig. 10 and Fig. 11. In the present embodiment, the shape of the spoiler differs from that of the above-described first embodiment. Therefore, structures that are similar to those of the first embodiment are denoted by the same reference numerals, and detailed description thereof is omitted.

As illustrated in Fig. 10, upper surface 431 of spoiler 430 is inclined with respect to a horizontal plane so as to be positioned further toward the lower side on progression toward the vehicle rear side.

Further, in the extended state, the angle of the upper surface 431 of the spoiler 430 with respect to a horizontal plane is the same angle as the angle of the upper surface 21 of the vehicle body 20 with respect to the horizontal plane H.

Moreover, in the extended state, the upper surface 431 of the spoiler 430 is flush with the upper surface 21 of the vehicle body 20.

As illustrated in Fig. 11, as seen in a rear view of the vehicle 10, the spoiler 430 is formed in a substantially upside-down U-shape. In detail, the spoiler 430 has a first portion 430A extending along the vehicle transverse direction, a second portion 430B extending from one vehicle transverse direction end portion of the first portion 430A toward the lower side, and a third portion 430C extending from another vehicle transverse direction end portion of the first portion 430A toward the lower side.

The first portion 430A is provided at the upper portion of the rear surface 22 of the vehicle body 20. The first portion 430A is provided along substantially the entire vehicle transverse direction region of the vehicle body 20. The second portion 430B is provided at a vehicle transverse direction one end portion of the vehicle body 20, and extends rectilinearly along the vertical direction as seen from the rear. The third portion is provided at the vehicle transverse direction another end portion of the vehicle body, and extends rectilinearly along the vertical direction as seen from the rear. As illustrated in Fig. 11, the second portion 430B and the third portion 430C are inclined so as to be positioned further toward the front side in the vehicle longitudinal direction on progression toward the lower side. The lower end portions of the second portion 430B and the third portion 430C are connected to the upper end portion of the undercover 23.

Note that the place where the spoiler 430 is accommodated is not particularly limited. For example, in the same way as in the above-described respective embodiments, the spoiler 430 may be accommodated in the back door. Further, the mechanism that moves the spoiler 430 is not particularly limited, and, for example, may be the moving mechanisms 40 described in the above first embodiment.

The following operation and effects are achieved in accordance with the present embodiment.
In the present embodiment, the second portion 430B and the third portion 430C that extend in the vehicle longitudinal direction are provided at the vehicle transverse direction both end portions of the vehicle body 20. Due thereto, in the extended state of the spoiler 430, the air that flows along the side surfaces of the vehicle body 20 from the vehicle front side toward the rear side is guided from the rear end portion of the vehicle body 20 to the side surface of the second portion 430B or the third portion 430C. Accordingly, it is difficult for the air that flows along the side surfaces of the vehicle body 20 to get swirled-up from the rear end portion of the vehicle body 20 in toward the rear side of the vehicle body. Therefore, swirling arising at the rear side of the vehicle body 20 is suppressed. Accordingly, the air resistance of the vehicle 10 at the time of traveling can be reduced.

Further, in the same way as in the first embodiment through the third embodiment, owing to the first portion 430A of the spoiler 430, it is difficult for the air that flows along the upper surface 21 of the vehicle body 20 to drop downwardly from the rear end portion of the vehicle body 20 (see arrow A5 in Fig. 10). Due thereto, swirling arising at the rear side of the vehicle body 20 is suppressed. Accordingly, air resistance of the vehicle at the time of traveling can be reduced.

Although a vehicle relating to embodiments has been described above, the design of the present disclosure can be changed appropriately within a scope that does not depart from the gist thereof.

For example, the vehicle may be provided with a control section that controls the moving mechanism such that the spoiler is set in an extended state when the traveling speed of the vehicle exceeds a predetermined threshold value. Further, the amount of extension of the spoiler (the amount by which the spoiler protrudes from the rear surface of the vehicle body) may be adjusted on the basis of the traveling speed of the vehicle.

Although the above, respective embodiments describe examples in which the spoiler is accommodated in the back door of the vehicle body, the present disclosure is not limited to this. For example, the spoiler may be accommodated in another member (e.g., the roof panel) of the vehicle body.

## Claims

1. A vehicle (10) comprising:
a fastback-shaped vehicle body (20); and
a flow manipulating portion (30) structured so as to be able to move between a retracted state of being accommodated in a connected portion of an upper surface (21) and a rear surface (22) of the vehicle body (20), and an extended state of projecting out toward a vehicle rear side from the rear surface (22) of the vehicle body (20) and forming an extension surface of the upper surface (21) of the vehicle body (20).

2. The vehicle (10) of claim 1, wherein, in the extended state, an angle of an upper surface (31) of the flow manipulating portion (30) with respect to a horizontal plane is smaller than an angle (θ) of the upper surface (21) of the vehicle body (20) with respect to the horizontal plane.

3. The vehicle (10) of claim 1, wherein, in the extended state, an angle of an upper surface (31) of the flow manipulating portion (30) with respect to a horizontal plane is a same angle as an angle (θ) of the upper surface (21) of the vehicle body (20) with respect to the horizontal plane.

4. The vehicle (10) of any one of claims 1 to 3, wherein, in the extended state, an upper surface (31) of the flow manipulating portion (30) is flush with the upper surface (21) of the vehicle body (20).

5. The vehicle (10) of any one of claims 1 to 4, wherein, in the retracted state, a rear end surface (32) of the flow manipulating portion (30) is flush with the rear surface (22) of the vehicle body (20).

6. The vehicle (10) of any one of claims 1 to 5, wherein:
the vehicle body (20) has a back door that closes an opening communicating an internal space of the vehicle body (20) and an external space of the vehicle body (20), and
in the retracted state, the flow manipulating portion (30) is accommodated in the back door.

7. The vehicle (10) of any one of claims 1 to 6, wherein a vehicle transverse direction length of the flow manipulating portion (30) becomes shorter toward a vehicle rear side.

8. The vehicle (10) of claim 1, wherein:
the flow manipulating portion (430) has a first portion (430A) extending along a vehicle transverse direction, a second portion (430B) extending toward a lower side from a vehicle transverse direction one end portion of the first portion (430A), and a third portion (430C) extending toward a lower side from a vehicle transverse direction another end portion of the first portion (430A),
the second portion (430B) is provided at a vehicle transverse direction one end portion of the vehicle body (20), and
the third portion (430C) is provided at a vehicle transverse direction another end portion of the vehicle body (20).

9. The vehicle (10) of claim 1, wherein:
the vehicle body (20) has an undercover (323) structuring a bottom surface, and
a rear end portion of the undercover (323) projects out further toward a vehicle rear side than the rear surface (22) of the vehicle body (20).

10. The vehicle (10) of claim 9, wherein:
a lower surface of the undercover (323) is inclined toward an upper side on progression toward a vehicle rear side, and
a vehicle longitudinal direction position of a rear end portion of the flow manipulating portion (330) that is in the extended state is at a same position as a vehicle longitudinal direction position of the rear end portion of the undercover (323).

11. The vehicle (10) of any one of claims 1 to 10, wherein:
in the retracted state, the flow manipulating portion (30) is accommodated at an interior of the vehicle body (20), and
the vehicle (10) comprises a moving mechanism (40) that moves the flow manipulating portion (30) between the retracted state and the extended state by sliding the flow manipulating portion (30) along a vehicle longitudinal direction.

12. The vehicle (10) of any one of claims 1 to 10, wherein:
in the retracted state, the flow manipulating portion (230) is provided so as to run along the rear surface (22) of the vehicle body (20), and
the vehicle (10) comprises a moving mechanism (240) that moves the flow manipulating portion (230) between the retracted state and the extended state by rotating the flow manipulating portion (230) around an axis that extends in a vehicle transverse direction.
